# EUROPÄISCHE PATENTSCHRIFT

(11) **EP 2 551 631 B1**
(45) Veröffentlichungstag und Bekanntmachung des Hinweises auf die Patenterteilung: **27.11.2013**
(21) Anmeldenummer: 12165389.3
(22) Anmeldetag: 24.04.2012
(51) Int. Cl.: G01B 5/012, G01B 21/04

(54) **Tastkopf**
Sensor head
Tête de palpage

(30) Priorität: 25.07.2011 DE 102011079738
(43) Veröffentlichungstag der Anmeldung: 30.01.2013
(73) Patentinhaber: Dr. Johannes Heidenhain GmbH, 83301 Traunreut (DE)
(72) Erfinder: Schopf, Reinhold, 83308 Trostberg (DE)

(56) Entgegenhaltungen:
- DE-A1- 3 804 111
- DE-A1- 19 622 987
- DE-A1-102004 016 714
- DE-B1- 2 242 355
- DE-C1- 3 532 184

## Beschreibung

Die Erfindung betrifft einen Tastkopf gemäß dem Anspruch 1, welcher insbesondere zuverlässig und robust betreibbar ist.

Tastsysteme werden beispielsweise zur Positionsbestimmung von Werkstücken verwendet, die in Material bearbeitenden Maschinen, z. B. Fräsmaschinen, eingespannt sind. Diese Tastsysteme weisen häufig eine stationäre Sender-Empfängereinheit auf, welche an einem ortfesten Element der Material bearbeitenden Maschine befestigt ist und ein relativ dazu bewegliches bzw. mobiles Teil, welches häufig als Tastkopf bezeichnet wird. Der Tastkopf ist meist an einem beweglichen Element der Material bearbeitenden Maschine, etwa an einer Frässpindel angebracht. Dabei umfasst der Tastkopf einen aus einer Ruheposition auslenkbaren Taststift, bzw. ein auslenkbares Tastelement, welches bei einer Auslenkung aus seiner Ruheposition heraus ein Schaltsignal erzeugt. Unter der Ruheposition des Tastelementes wird eine Position des Tastelementes verstanden, in der es keinen Kontakt mit einem Werkstück hat. Bei Kontakt des Tastelementes mit dem Werkstück wird das Tastelement aus seiner Ruheposition heraus ausgelenkt.

In der DE 35 32 184 C1 wird beispielsweise ein Tastkopf angegeben, bei dem durch eine zentrische Lagerung und einem einzelnen von der Mittelachse versetzten Schalter eine Kollisionsschutzeinrichtung geschaffen wird.

Daneben ist in der DE 38 04 111 A1 ein Tastkopf mit Gehäuse und Taststift offenbart. Eine erste Gehäuseeinheit ist dabei an einer Koordinatenmessmaschine befestigt und eine zweite Gehäuseeinheit dient zur Lagerung des Taststifts. Die DE 38 04 111 A1 benennt als Teil der zweiten Gehäuseeinheit z.B. einen aus der DE 22 42 355 B1 bekannten Mehrkoordinatentaster, bei dem der Taststift in die drei Raumrichtungen auslenkbar gelagert ist und bei Auslenkung ein elektrisches Signal ausgelöst wird. Der Tastkopf weist außerdem eine Schalteinheit mit drei um 120° versetzten Lagerstellen mit Stiften und Kugeln als Kontaktelementen auf. Bei Unterbrechung des Kontakts wird über "Not-Aus" der Motorantrieb der Koordinatenmessmaschine abgeschaltet.

Der Erfindung liegt unter anderem die Aufgabe zugrunde, einen Tastkopf zu schaffen, welcher unempfindlich gegenüber Kollisionen des Gehäuses ist und dennoch eine überaus hohe Messgenauigkeit erreicht.

Diese Aufgabe wird erfindungsgemäß durch einen Tastkopf mit den Merkmalen des Anspruches 1 gelöst.

Demnach umfasst der Tastkopf ein Gehäuse und einen Taststift, wobei das Gehäuse eine erste Gehäuseeinheit mit einer Längsachse aufweist. Diese erste Gehäuseeinheit ist insbesondere zur Befestigung an einer Werkzeugmaschine bestimmt und weist einen kegelförmigen Bereich auf, der in ein Spannfutter der Werkzeugmaschine ein führbar ist. Das Gehäuse weist zudem eine zweite Gehäuseeinheit auf, an welcher der Taststift auslenkbar gelagert ist, wobei bei einer Auslenkung des Taststifts relativ zur zweiten Gehäuseeinheit von einer Sensoreinheit ein elektrisches Signal auslösbar ist. Die zweite Gehäuseeinheit ist weiterhin beweglich an der ersten Gehäuseeinheit auslenkbar gelagert. Ferner weist der Tastkopf eine Schalteinheit auf, die ein erstes Kontaktelement und ein zweites Kontaktelement umfasst, wobei die Kontaktelemente derart angeordnet sind, dass bei einer Auslenkung der zweiten Gehäuseeinheit relativ zur ersten Gehäuseeinheit die Kontaktelemente in Abhängigkeit von der Richtung der Auslenkung an unterschiedlichen Punkten bzw. Stellen gegenseitig in Kontakt bzw. Berührkontakt bringbar sind. Durch diesen mechanischen und elektrischen Kontakt ist ein elektrisches Schaltsignal auslösbar.

Eine Auslenkung tritt in der Regel dann auf, wenn das Gehäuse, insbesondere die zweite Gehäuseeinheit mit einem Hindernis kollidiert. Das Schaltsignal kann dann einen Stopp der Maschine, an welcher die erste Gehäuseeinheit befestigbar ist, auslösen, so dass eine Beschädigung des Tastkopfs vermieden werden kann.

Mit Vorteil sind die Kontaktelemente in einem Zustand, in dem die zweite Gehäuseeinheit relativ zur ersten Gehäuseeinheit nicht ausgelenkt ist, durch einen axialen Luftspalt voneinander getrennt. Dieser Zustand stellt den Normalbetrieb des Tastkopfs dar, wenn also keine Kollision erfolgt.

Zumindest eines der Kontaktelemente kann axialelastisch ausgestaltet sein, das heißt, dass dieses Kontaktelement entlang der Längsachse elastisch verformbar bzw. federnd ausgestaltet ist.

Gemäß einer vorteilhaften Bauweise ist eines der Kontaktelemente als Feder, beispielsweise als eine Stahl-, Kunststoff- oder Gummifeder ausgestaltet. Bei Kunststoff- oder Gummifedern kann ein elektrischer Leiter oder eine elektrisch leitende Schicht zur elektrischen Kontaktierung mit dem anderen Kontaktelement vorgesehen sein. Insbesondere kann eines der Kontaktelemente als eine zylindrische oder kegelförmige Schraubenfeder, ausgestaltet sein.

Insbesondere kann zumindest ein Kontaktelement als Platte oder Scheibe ausgestaltet sein, die selbst elektrisch leitend ist oder einen Leiter umfasst oder eine elektrisch leitende Oberfläche aufweist. In weiterer Ausgestaltung der Erfindung weist zumindest ein Kontaktelement eine ebene Fläche auf, die orthogonal zur Längsachse orientiert ist.

Mit Vorteil weisen beide Kontaktelemente jeweils eine ebene Fläche auf, so dass in einem Zustand, in dem die zweite Gehäuseeinheit relativ zur ersten Gehäuseeinheit nicht ausgelenkt ist, diese ebenen Flächen durch einen axialen Luftspalt voneinander getrennt sind. So kann beispielsweise das erste Kontaktelement als Platte, Scheibe oder Ringscheibe ausgestaltet sein, so dass dieses erste Kontaktelement eine ebene Oberfläche bzw. Stirnfläche, insbesondere an ihrem axialen Ende aufweist. Das zweite Kontaktelement kann als Schraubenfeder ausgestaltet sein, dessen Ende, welches dem ersten Kontaktelement gegenüber liegt, eben ausgestaltet ist.

Weiterhin können die Kontaktelemente derart ausgestaltet und angeordnet sein, dass die unterschiedlichen Punkte oder Stellen an denen der gegenseitige Kontakt der Kontaktelemente erfolgen kann, den gleichen Abstand zur Längsachse aufweisen. Insbesondere können die Punkte symmetrisch zur Längsachse angeordnet sein.

Mit Vorteil ist der Tastkopf so konfiguriert, dass eines der Kontaktelemente als eine Feder ausgestaltet ist, deren Achse mit der Längsachse der ersten Gehäuseeinheit zusammenfällt. Das heißt, dass die Achse und die Längsachse übereinanderliegend am selben Ort angeordnet sind. Diese Anordnung ist insbesondere bei Verwendung von zylindrischen oder kegelförmigen Schraubenfedern als Kontaktelement von Vorteil.

In einer Weiterbildung der Erfindung weist der Tastkopf einen Schalter auf, wobei der Tastkopf derart konfiguriert ist, dass durch die Betätigung der Schalteinheit oder des Schalters ein Befehl generierbar ist, durch welchen die gleiche Reaktion der Werkzeugmaschine auslösbar ist. Eine derartige Reaktion der Werkzeugmaschine kann etwa ein Stopp der Werkzeugmaschine sein. Durch den Schalter und die Schalteinheit ist also jeweils ein Befehl generierbar, der den gleichen Informationsgehalt aufweist.

Weiterhin kann der Tastkopf einen Schalter aufweisen, wobei in einem Zustand, in dem die zweite Gehäuseeinheit relativ zur ersten Gehäuseeinheit nicht ausgelenkt ist und in dem die erste Gehäuseeinheit an eine Werkzeugmaschine befestigt ist, sowohl der Schalter als auch die Schalteinheit geöffnet sind, so dass jeweils ein Stromfluss durch den Schalter als auch durch die Schalteinheit unterbrochen ist.

Vorteilhafte Ausbildungen der Erfindung entnimmt man den abhängigen Ansprüchen.

Weitere Einzelheiten und Vorteile des erfindungsgemäßen Tastkopfs ergeben sich aus der nachfolgenden Beschreibung eines Ausführungsbeispiels.

Es zeigen die
- Figur 1: eine perspektivische Ansicht eines Tastkopfs,
- Figur 2: eine Detailansicht der Messeinrichtung des Tastkopfes,
- Figur 3: eine perspektivische Detailansicht einer Lagerung zwischen ei-ner zweiten und einer ersten Gehäuseeinheit bei geöffneter ers-ten Gehäuseeinheit,
- Figur 4: eine Teilschnittdarstellung des Tastkopfes,
- Figur 5: eine Detailansicht als Draufsicht auf Kontaktelemente,
- Figur 6: eine Detailansicht als Seitenansicht auf Kontaktelemente,
- Figur 7: eine Detailansicht als Schnitt auf die Lagerung zwischen der zweiten und der ersten Gehäuseeinheit.

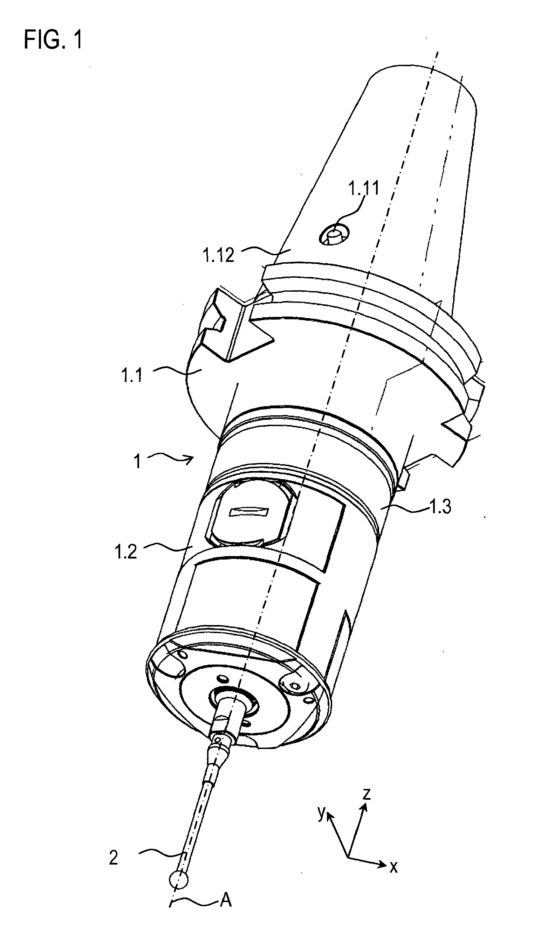

In der Figur 1 ist ein Tastkopf in einer perspektivischen Außenansicht gezeigt. Der Tastkopf umfasst demnach ein Gehäuse 1, welches eine erste Gehäuseeinheit 1.1 und eine zweite Gehäuseeinheit 1.2 aufweist, wobei die zweite Gehäuseeinheit 1.2 beweglich an der ersten Gehäuseeinheit 1.1 auslenkbar gelagert ist.

Die erste Gehäuseeinheit 1.1 weist einen kegelförmigen Bereich 1.12 auf, der in ein Spannfutter einer Werkzeugmaschine eingeführt werden kann. Am kegelförmigen Bereich 1.12 ist weiterhin ein Schalter 1.11 angeordnet, durch den sichergestellt wird, dass der batteriebetriebene Tastkopf ausgeschaltet ist, während dieser nicht eingespannt ist.

Aus der zweiten Gehäuseeinheit 1.2 ragt ein Taststift 2. Der Taststift 2 weist eine Längsachse auf, welche im Ruhezustand bzw. in der Ruheposition gleichzeitig die Längsachse A des Gehäuses 1, insbesondere der zweiten Gehäuseeinheit 1.2 darstellt.

Zum Schutz gegen Umwelteinflüsse ist im Bereich zwischen der ersten Gehäuseeinheit 1.1 und der zweiten Gehäuseeinheit 1.2 eine verformbare Manschette 1.3 aus Gummi vorgesehen.

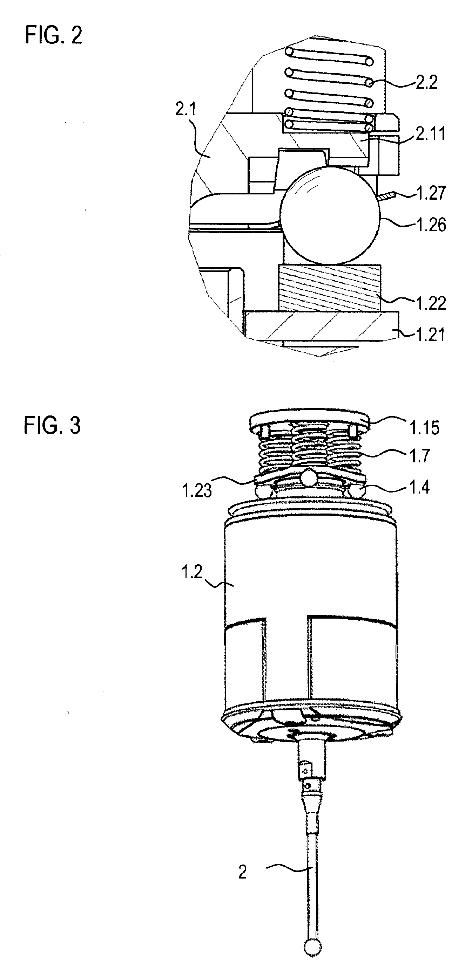

In der Figur 2 ist eine Messeinrichtung, wie sie im Inneren der zweiten Gehäuseeinheit 1.2 des Gehäuses 1 angeordnet ist, gezeigt. Im vorgestellten Ausführungsbeispiel umfasst der Taststift 2 einen Stifthalter 2.1, welcher mit dem Taststift 2 mittels einer Schraubverbindung lösbar verbunden ist. Der Stifthalter 2.1 des Taststifts 2 weist an einem Ende drei um 120° versetzt angeordnete Arme 2.11 auf, wobei in der Figur 2 nur einer der Arme 2.11 sichtbar ist. In der zweiten Gehäuseeinheit 1.2 befindet sich weiterhin eine Leiterplatte 1.21, auf der drei Sensoren 1.22 montiert sind, wobei in der Figur 2 ist nur einer der Sensoren 1.22 gezeigt ist. Im vorgestellten Ausführungsbeispiel werden als Sensoren 1.22 Drucksensorelemente verwendet, welche auf piezoresistiven Siliziumchips basieren. Diese Sensoren 1.22 weisen eine druckempfindliche Oberfläche auf, an der sich hier pn-isolierte Brückenwiderstände befinden. Im Betrieb des Tastkopfes wird eine Speisespannung zur Versorgung der Sensoren 1.22 über die Leiterplatte 1.21 eingeleitet. Auf der Oberfläche eines jeden Sensors 1.22 ruhen Kugeln 1.26, welche als mechanische Übertragungselemente dienen. Damit die Kugeln 1.26 jederzeit exakt relativ zu den Sensoren 1.22 positioniert sind, ist ein Halterungselement 1.27 vorgesehen, welches bezüglich der Sensoren 1.22 ortsfest festgelegt ist.

Der Stifthalter 2.1 des Taststifts 2 ist zentral in der zweiten Gehäuseeinheit 1.2 des Tastkopfes gelagert. Vorgespannt durch Federn 2.2 ruhen entsprechend die Arme 2.11 des Stifthalters 2.1 auf den Kugeln 1.26, wobei der Stifthalter 2.1 relativ zur zweiten Gehäuseeinheit 1.2 beweglich gelagert ist und damit auch relativ zu den Sensoren 1.22 beweglich, bzw. auslenkbar ist.

Sobald die Antastkugel (siehe Figur 1 am unteren Ende des Taststifts 2) am Taststift 2 ein zu vermessendes Werkstück berührt, werden Druckkräfte bzw. veränderte Druckkräfte zunächst in die zugehörige Kugel 1.26 eingeleitet, welche dann entsprechende Druckkräfte an den zugeordneten Sensor 1.22 weiterleitet. Die Sensoren 1.22 erzeugen jeweils eine entsprechende Pegeländerung in ihren elektrischen Signalen. Die Signale werden weiterverarbeitet und bei Erfüllung vorgegebener Kriterien wird ein elektrisches Signal erzeugt. Die Auslenk- bzw. Schaltposition ist erreicht, bevor einer der Arme 2.11 des Taststifts 2 den mechanischen Kontakt zu der entsprechenden Kugel 1.26 verliert. Dadurch wird verhindert, dass eine richtungsabhängige Schaltcharakteristik entsteht. Die entsprechenden elektrischen Signale werden schließlich in elektromagnetische Signale umgewandelt, welche zu einer ortsfesten Empfängerstation gesendet werden. Die ortsfeste Empfängerstation ist an einem unbeweglichen Bauteil beispielsweise der Werkzeugmaschine fixiert. Von dieser ortsfesten Empfängerstation wird das empfangene Signal an eine Elektronik, etwa in der Steuerung der Werkzeugmaschine weitergeleitet, wo die Position der Antastkugel bestimmt wird, und gleichzeitig die Maschine angehalten wird.

Wenn der Tastkopf aus der Anschlagposition heraus gefahren wird, kehrt das Taststift 2 wieder in die Ruheposition zurück. Durch das Halterungselement 1.27 ist sichergestellt, dass die Kugeln 1.26 jeweils reproduzierbar am richtigen Punkt auf der Oberfläche der Sensoren 1.22 lagern, wenn der Taststift 2 aus der Anschlagposition in die Ruheposition zurückkehrt.

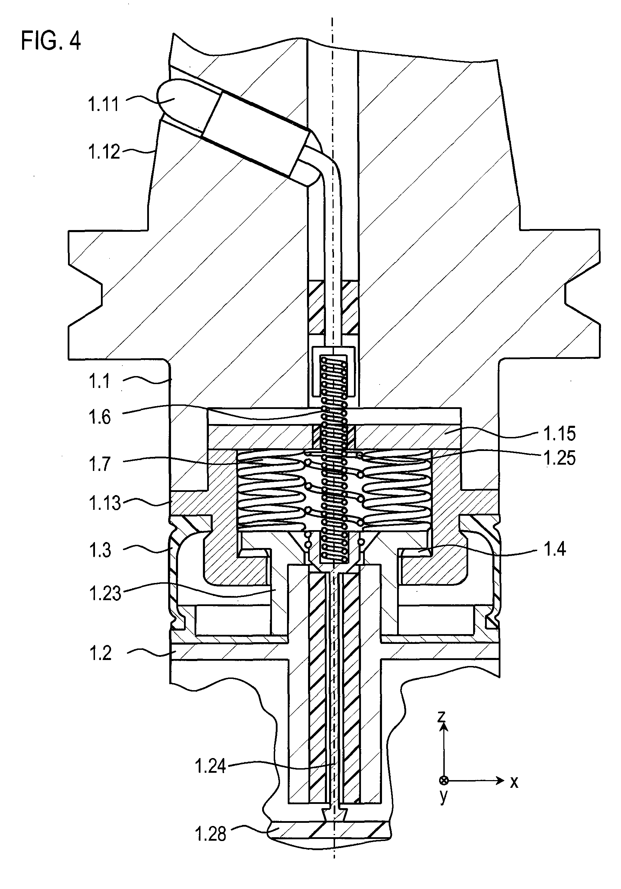

In der Figur 4 ist ein Teillängsschnitt durch den Tastkopf gezeigt. Im kegelförmigen Bereich 1.12 der ersten Gehäuseeinheit 1.1 befindet sich ein Schalter 1.11. Der Schalter 1.11 weist ein rundes Ende auf, das aus der Kegelkontur des Bereichs 1.12 herausragt, wenn der Tastkopf nicht in eine Spindel der Werkzeugmaschine eingeführt ist. In diesem Zustand ist die Stellung des Schalters 1.11 geschlossen. Ein Kontakt des Schalters 1.11 ist über ein Kabel, welches an einer Schraubenfeder 1.6 elektrisch leitend befestigt ist und einem Dorn 1.24 mit einer Leiterbahn auf einer Leiterplatte 1.28 verbunden. Auf diese Weise kann erreicht werden dass der Tastkopf nicht in Betrieb ist, solange der Schalter 1.11 geschlossen ist. Sobald der Tastkopf aber in eine Spindel der Werkzeugmaschine eingelegt wird, wird das federnd gelagerte Ende in die Bohrung des Bereichs 1.12 gedrückt und der Schalter 1.11 öffnet, so dass der Tastkopf in Betrieb gehen kann.

Es kann nicht ausgeschlossen werden, dass unbeabsichtigt das Gehäuse 1 im Zuge eines Messvorgangs zum Beispiel mit einer Kante des zu messenden Objekts kollidiert. Zur Vermeidung von Beschädigungen des Tastkopfes ist für diesen Fall die zweite Gehäuseeinheit 1.2 beweglich an der ersten Gehäuseeinheit 1.1 auslenkbar gelagert. Die Lagerung umfasst eine erste Hülse 1.13, welche der ersten Gehäuseeinheit 1.1 zugeordnet werden kann, sowie eine zweite Hülse 1.23, die zur zweiten Gehäuseeinheit 1.2 gehört. Zwischen den Hülsen 1.13, 1.23 sind Kugeln 1.4 angeordnet.

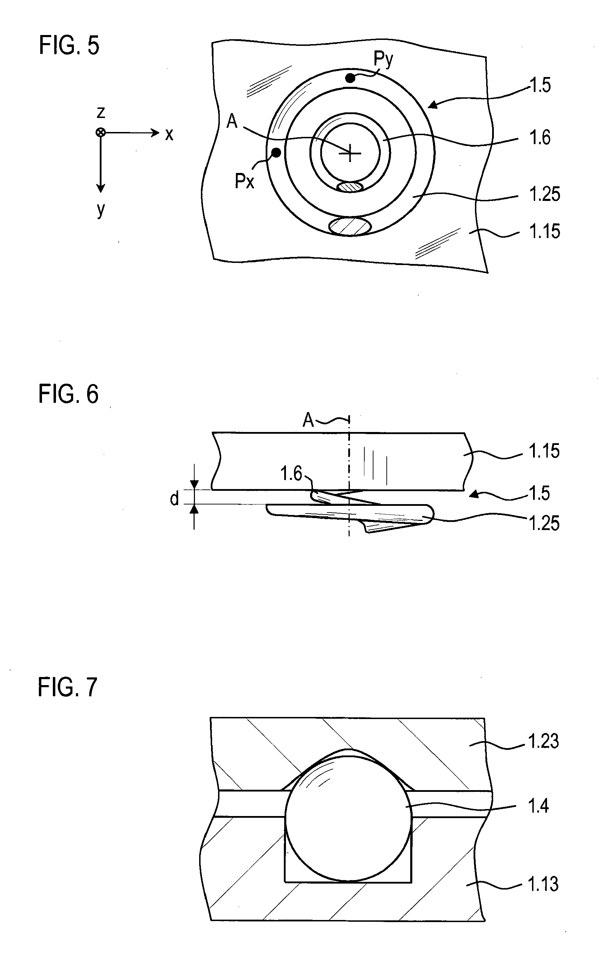

In der Figur 7 ist eine Schnittdarstellung der Lagerung, insbesondere durch die Hülsen 1.13, 1.23 im Bereich einer Kugel 1.4 gezeigt. Demnach ist die Kugel 1.4 in eine Bohrung der Hülse 1.13, die zur ersten Gehäuseeinheit 1.1 gehört, eingepresst. Gegenüberliegend ruht die Kugel 1.4 in einer Ausnehmung der anderen Hülse 1.23, welche der zweiten Gehäuseeinheit 1.2 zugeordnet ist. Die Kugel 1.4 berührt die Hülse 1.23 der zweiten Gehäuseeinheit 1.2 nur an zwei Punkten. Gemäß den Figuren 3 und 4 wird die Hülse 1.23 der zweiten Gehäuseeinheit 1.2 mit Hilfe von Schraubenfedern 1.7 an die Kugeln 1.4 gedrückt. Dabei ist jeweils ein Ende einer Schraubenfeder 1.7 mit der Hülse 1.23 in Kontakt und das andere Ende der betreffenden Schraubenfeder 1.7 drückt gegen ein im Wesentlichen ringförmiges erstes Kontaktelement 1.15 mit einer ebenen Fläche als axiale Begrenzung. Das erste Kontaktelement 1.15 ist Bestandteil einer Schalteinheit 1.5, dessen elektrische Funktion weiter unten erläutert wird. Durch diese Bauweise kann sichergestellt werden, dass die beiden Gehäuseeinheiten 1.1, 1.2 im Normalbetrieb stets korrekt zueinander positioniert sind, insbesondere kann die Ausgangsposition nach einer Auslenkung der zweiten Gehäuseeinheit 1.2 relativ zur ersten Gehäuseeinheit 1.1 exakt und reproduzierbar wieder eingenommen werden.

Weiterhin befindet sich innerhalb des Gehäuses 1 als weiterer Bestandteil der Schalteinheit 1.5 ein zweites Kontaktelement 1.25 in Form einer Schraubenfeder, welche an einem axialen Ende so ausgebildet ist, dass diese eine ebene Fläche aufweist. In der Figur 6 ist die Schalteinheit 1.5 mit ihren Kontaktelementen 1.15, 1.25 in einer gegenüber der Figur 4 vergrößerten Teilansicht in einem in einem Zustand, in dem die zweite Gehäuseeinheit 1.2 relativ zur ersten Gehäuseeinheit 1.1 nicht ausgelenkt ist, gezeigt. In diesem Zustand, also im Normalbetrieb, sind die beiden Kontaktelemente 1.15, 1.25 bzw. die ebenen Flächen der Kontaktelemente 1.15, 1.25 durch einen Luftspalt d in Axialrichtung voneinander getrennt, so dass diese Stellung einer offenen Schalterstellung der Schalteinheit 1.5 entspricht und folglich kein Stromfluss zwischen der Leiterplatte 1.28 und der ersten Gehäuseeinheit 1.1 möglich ist. Elektrisch parallel zur Schalteinheit 1.5 bzw. zu den Kontaktelementen 1.15, 1.25 geschaltet ist der Schalter 1.11, so dass der Tastkopf einen Stopp der Maschine, also eine Ende des Verfahrvorgangs des Tastkopfes auslöst, wenn entweder der Schalter 1.11 geschlossen wird, folglich der Tastkopf aus der Werkzeugmaschine entnommen wird, oder wenn sich die Kontaktelemente 1.15, 1.25 berühren.

Eine derartige Berührung der Kontaktelemente 1.15, 1.25 kann erfolgen, wenn die zweite Gehäuseeinheit 1.2 relativ zur ersten Gehäuseeinheit 1.1 ausgelenkt wird, wenn also eine Kollision der zweiten Gehäuseeinheit 1.2 mit einem Gegenstand beispielsweise im Bearbeitungsraum einer Werkzeugmaschine stattfindet.

In der Figur 5 ist eine Ansicht auf das zweite Kontaktelement 1.25 (bezogen auf die Figur 4 entspricht die Figur 5 einer Teilansicht von unten) gezeigt. Radial innerhalb des ersten Kontaktelements 1.15 befindet sich die Schraubenfeder 1.6. Durch Verfahren des Tastkopfes in x-Richtung kann die zweite Gehäuseeinheit 1.2 mit einem Hindernis kollidieren. Dadurch wird eine entsprechende Auslenkung der zweiten Gehäuseeinheit 1.2 gegenüber der ersten Gehäuseeinheit 1.1 unter Verformung der Manschette 1.3 eintreten und zwar in der Weise, dass das erste Kontaktelement 1.15 vom zweiten axialelastischen Kontaktelement 1.25 am Punkt Px unter axialer Kompression des zweiten Kontaktelements 1.25 berührt wird. Diese Berührung löst ein Schaltsignal aus und die Bewegung der Werkzeugmaschine und damit auch des Tastkopfes wird gestoppt. Eine analoge Betrachtung kann angestellt werden für den Fall, dass beispielsweise der Tastkopf in y-Richtung bewegt wird, wobei dann das zweite Kontaktelement 1.25 an einem Punkt Py vom ersten Kontaktelement 1.15 berührt wird. Die Punkte Px und Py sind unterschiedlich im Hinblick auf ihre Lage, haben aber den gleichen Abstand zur Längsachse A. Sofern eine Auslenkung der zweiten Gehäuseeinheit 1.2 gegenüber der ersten Gehäuseeinheit 1.1 in z-Richtung erfolgt, wird eine Kontaktierung an mehreren Punkten entlang einer umlaufenden Linie erreicht.

## Patentansprüche

1. Tastkopf umfassend ein Gehäuse (1) und einen Taststift (2), wobei das Gehäuse (1)
eine erste Gehäuseeinheit (1.1) mit einer Längsachse (A) aufweist, wobei die erste Gehäuseeinheit (1.1) zur Befestigung an einer Werkzeugmaschine bestimmt ist und einen kegelförmigen Bereich (1.12) aufweist, der in ein Spannfutter der Werkzeugmaschine einführbar ist,
eine zweite Gehäuseeinheit (1.2) aufweist, an welcher der Taststift (2) auslenkbar gelagert ist,
wobei bei einer Auslenkung des Taststifts (2) relativ zur zweiten Gehäuseeinheit (1.2) von einer Sensoreinheit (1.22) ein elektrisches Signal auslösbar ist, und
die zweite Gehäuseeinheit (1.2) beweglich an der ersten Gehäuseeinheit (1.1) auslenkbar gelagert ist, und
der Tastkopf weiterhin eine Schalteinheit (1.5) aufweist, die ein erstes Kontaktelement (1.15) und ein zweites Kontaktelement (1.25) umfasst, wobei die Kontaktelemente (1.15, 1.25) derart angeordnet sind, dass bei einer Auslenkung der zweiten Gehäuseeinheit (1.2) relativ zur ersten Gehäuseeinheit (1.1) die Kontaktelemente (1.15, 1.25) in Abhängigkeit von der Richtung der Auslenkung an unterschiedlichen Punkten (Px, Py) gegenseitig in Kontakt bringbar sind, wobei durch diesen Kontakt ein elektrisches Schaltsignal auslösbar ist.

2. Tastkopf gemäß dem Anspruch 1, wobei die Kontaktelemente (1.15, 1.25) in einem Zustand, in dem die zweite Gehäuseeinheit (1.2) relativ zur ersten Gehäuseeinheit (1.1) nicht ausgelenkt ist, durch einen axialen Luftspalt (d) voneinander getrennt sind.

3. Tastkopf gemäß einem der Ansprüche 1 oder 2, wobei eines der Kontaktelemente (1.15, 1.25) axialelastisch ausgestaltet ist.

4. Tastkopf gemäß einem der vorhergehenden Ansprüche, wobei eines der Kontaktelemente (1.25) als Feder, insbesondere als Schraubenfeder, ausgestaltet ist.

5. Tastkopf gemäß einem der vorhergehenden Ansprüche, wobei die unterschiedlichen Punkte (Px, Py) zur Längsachse (A) den gleichen Abstand aufweisen.

6. Tastkopf gemäß einem der vorhergehenden Ansprüche, wobei die Kontaktelemente (1.15, 1.25) jeweils eine ebene Fläche aufweisen und in einem Zustand, in dem die zweite Gehäuseeinheit (1.2) relativ zur ersten Gehäuseeinheit (1.1) nicht ausgelenkt ist, diese ebenen Flächen durch einen axialen Luftspalt (d) voneinander getrennt sind.

7. Tastkopf gemäß einem der vorhergehenden Ansprüche, wobei eines der Kontaktelemente (1.25) als Schraubenfeder ausgestaltet ist, deren Achse mit der Längsachse (A) der ersten Gehäuseeinheit (1.1) zusammenfällt.

8. Tastkopf gemäß einem der vorhergehenden Ansprüche, wobei der Tastkopf einen Schalter (1.11) aufweist und der Tastkopf derart konfiguriert ist, dass durch die Betätigung der Schalteinheit (1.5) oder des Schalters (1.11) ein Befehl generierbar ist, durch welchen die gleiche Reaktion der Werkzeugmaschine auslösbar ist.

9. Tastkopf gemäß dem Anspruch 8, wobei die Reaktion der Maschine ein Stopp der Werkzeugmaschine ist.

10. Tastkopf gemäß einem der vorhergehenden Ansprüche, wobei der Tastkopf einen Schalter (1.11) aufweist und in einem Zustand, in dem die zweite Gehäuseeinheit (1.2) relativ zur ersten Gehäuseeinheit (1.1) nicht ausgelenkt ist und in dem die erste Gehäuseeinheit (1.1) an einer Werkzeugmaschine befestigt ist, sowohl der Schalter (1.11) als auch die Schalteinheit (1.5) geöffnet sind, so dass jeweils ein Stromfluss unterbrochen ist.

## Claims

1. Sensing head comprising a housing (1) and a sensing pin (2), wherein the housing (1)
has a first housing unit (1.1) having a longitudinal axis (A),
wherein the first housing unit (1.1) is intended to be fastened to a machine tool and has a conical region (1.12) which can be inserted into a chuck of the machine tool,
has a second housing unit (1.2) on which the sensing pin (2) is mounted such that it can be deflected,
wherein an electrical signal can be triggered by a sensor unit (1.22) when the sensing pin (2) is deflected relative to the second housing unit (1.2), and
the second housing unit (1.2) is mounted such that it can be deflected in a movable manner on the first housing unit (1.2), and
the sensing head further has a switching unit (1.5) which comprises a first contact element (1.15) and a second contact element (1.25), wherein the contact elements (1.15, 1.25) are arranged in such a way that the contact elements (1.15, 1.25) can be brought into contact with one another depending on the direction of the deflection at different points (Px, Py) when the second housing unit (1.2) is deflected relative to the first housing unit (1.1), wherein an electrical switching signal can be triggered by this contact.

2. Sensing head according to Claim 1, wherein the contact elements (1.15, 1.25) are separated from one another by an axial air gap (d) in a state in which the second housing unit (1.2) is not deflected relative to the first housing unit (1.1).

3. Sensing head according to either of Claims 1 and 2, wherein one of the contact elements (1.15, 1.25) is of axially elastic design.

4. Sensing head according to one of the preceding claims, wherein one of the contact elements (1.25) is designed as a spring, in particular as a helical spring.

5. Sensing head according to one of the preceding claims, wherein the different points (Px, Py) are at the same distance from the longitudinal axis (A).

6. Sensing head according to one of the preceding claims, wherein the contact elements (1.15, 1.25) each have a flat area and these flat areas are separated from one another by an axial air gap (d) in a state in which the second housing unit (1.2) is not deflected relative to the first housing unit (1.1).

7. Sensing head according to one of the preceding claims, wherein one of the contact elements (1.25) is designed as a helical spring, the axis of the said helical spring coinciding with the longitudinal axis (A) of the first housing unit (1.1).

8. Sensing head according to one of the preceding claims, wherein the sensing head has a switch (1.11) and the sensing head is designed in such a way that a command by means of which the same reaction of the machine tool can be triggered can be generated by the operation of the switching unit (1.5) or of the switch (1.11).

9. Sensing head according to Claim 8, wherein the reaction of the machine is to stop the machine tool.

10. Sensing head according to one of the preceding claims, wherein the sensing head has a switch (1.11) and both the switch (1.11) and the switching unit (1.5) are opened, so that a flow of current is interrupted in each case, in a state in which the second housing unit (1.2) is not deflected relative to the first housing unit (1.1) and in which the first housing unit (1.1) is fastened to a machine tool.

## Revendications

1. Tête de palpage comprenant un boîtier (1) et une goupille de palpage (2), le boîtier (1) présentant
- une première unité de boîtier (1.1) avec un axe longitudinal (A), la première unité de boîtier (1.1) étant prévue pour la fixation sur une machine-outil et présentant une région de forme conique (1.12), qui peut être introduite dans un mandrin de serrage de la machine-outil,
- une deuxième unité de boîtier (1.2), sur laquelle la goupille de palpage (2) est montée de manière à pouvoir être déviée,
dans le cas d'une déviation de la goupille de palpage (2) par rapport à la deuxième unité de boîtier (1.2), une unité de détection (1.22) pouvant déclencher un signal électrique, et
la deuxième unité de boîtier (1.2) pouvant être montée mobile sur la première unité de boîtier (1.1) de manière à pouvoir être déviée, et
la tête de palpage présentant en outre une unité de commutation (1.5) qui comprend un premier élément de contact (1.15) et un deuxième élément de contact (1.25), les éléments de contact (1.15, 1.25) étant disposés de telle sorte que dans le cas d'une déviation de la deuxième unité de boîtier (1.2) par rapport à la première unité de boîtier (1.1), les éléments de contact (1.15, 1.25) puissent être amenés en contact mutuel en fonction de la direction de la déviation au niveau de points différents (Px, Py), ce contact permettant de déclencher un signal de commutation électrique.

2. Tête de palpage selon la revendication 1, dans laquelle les éléments de contact (1.15, 1.25), dans un état dans lequel la deuxième unité de boîtier (1.2) n'est pas déviée par rapport à la première unité de boîtier (1.1), sont séparés l'un de l'autre par un entrefer axial (d).

3. Tête de palpage selon l'une des revendications 1 et 2, dans laquelle l'un des éléments de contact (1.15, 1.25) est configuré sous forme élastique axialement.

4. Tête de palpage selon l'une quelconque des revendications précédentes, dans laquelle l'un des éléments de contact (1.25) est réalisé sous forme de ressort, en particulier sous forme de ressort à boudin.

5. Tête de palpage selon l'une quelconque des revendications précédentes, dans laquelle les différents points (Px, Py) présentent la même distance par rapport à l'axe longitudinal (A).

6. Tête de palpage selon l'une quelconque des revendications précédentes, dans laquelle les éléments de contact (1.15, 1.25) présentent chacun une surface plane et, dans un état dans lequel la deuxième unité de boîtier (1.2) n'est pas déviée par rapport à la première unité de boîtier (1.1), ces surfaces planes sont séparées l'une de l'autre par un entrefer axial (d).

7. Tête de palpage selon l'une quelconque des revendications précédentes, dans laquelle l'un des éléments de contact (1.25) est configuré sous forme de ressort à boudin, dont l'axe coïncide avec l'axe longitudinal (A) de la première unité de boîtier (1.1).

8. Tête de palpage selon l'une quelconque des revendications précédentes, dans laquelle la tête de palpage présente un commutateur (1.11) et la tête de palpage est configurée de telle sorte que, par l'actionnement de l'unité de commutation (1.5) ou du commutateur (1.11), un ordre puisse être généré afin de pouvoir déclencher la même réaction de la machine-outil.

9. Tête de palpage selon la revendication 8, dans laquelle la réaction de la machine est un arrêt de la machine-outil.

10. Tête de palpage selon l'une quelconque des revendications précédentes, dans laquelle la tête de palpage présente un commutateur (1.11) et, dans un état dans lequel la deuxième unité de boîtier (1.2) n'est pas déviée par rapport à la première unité de boîtier (1.1) et dans lequel la première unité de boîtier (1.1) est fixée à une machine-outil, le commutateur (1.11) ainsi que l'unité de commutation (1.5) sont ouverts, de telle sorte qu' à chaque fois un flux de courant soit interrompu.
